# EUROPÄISCHE PATENTSCHRIFT

(11) **EP 2 954 271 B1**
(45) Veröffentlichungstag und Bekanntmachung des Hinweises auf die Patenterteilung: **06.03.2019**
(21) Anmeldenummer: 14700559.9
(22) Anmeldetag: 17.01.2014
(51) Int. Cl.: F25D 23/06

(54) **KÜHL- UND/ODER GEFRIERGERÄT**
REFRIGERATOR AND/OR FREEZER DEVICE
APPAREIL DE RÉFRIGÉRATION ET/OU CONGÉLATEUR

(30) Priorität: 07.02.2013 DE 102013002312
(43) Veröffentlichungstag der Anmeldung: 16.12.2015
(73) Patentinhaber: Liebherr-Hausgeräte Lienz GmbH, 9900 Lienz (AT); Liebherr-Hausgeräte Ochsenhausen GmbH, 88416 Ochsenhausen (DE)
(72) Erfinder: FREITAG, Michael, 97250 Erlabrunn (DE); KERSTNER, Martin, 97072 Würzburg (DE); HIEMEYER, Jochen, 97753 Karlstadt (DE)
(74) Vertreter: Herrmann, Uwe
(86) Internationale Anmeldenummer: PCT/EP2014/000122
(87) Internationale Veröffentlichungsnummer: WO 2014/121889

(56) Entgegenhaltungen:
- WO-A1-01/39570
- WO-A1-99/20961
- DE-A1-102006 039 621
- GB-A- 430 123
- JP-A- H08 312 880
- US-A- 970 095
- US-A- 1 898 977
- US-A- 2 687 158
- US-A- 5 551 590
- US-B1- 6 224 179

## Beschreibung

Die vorliegende Erfindung betrifft ein Kühl- und/oder Gefriergerät mit einem Vakuumdämmkörper mit einer vakuumdichten Umhüllung.

Aus dem Stand der Technik ist es bekannt, beispielsweise bei Kühl- und/oder Gefriergeräten die Wandung, die den gekühlten Innenraum umgibt, als Vakuumdämmkörper auszubilden. Ein solcher Dämmkörper besteht üblicherweise aus einer Umhüllung, die diffusionsdicht ausgeführt sein muss, sowie einem Stützmaterial, wie beispielsweise einer Schüttung, die dem Vakuumdämmkörper die erforderliche mechanische Stabilität verleiht.

Dieser Vakuumdämmkörper kann den gekühlten Innenraum abgesehen von seiner offenen, durch eine Tür oder dergleichen verschließbaren Seite vollständig umgeben, so dass sich das Problem ergibt, dass zum Betrieb des Gerätes erforderliche Leitungen, wie beispielsweise Kältemittelleitungen oder elektrische Leitungen, die zum Innenbehälter geführt werden müssen, gegebenenfalls an dem Vakuumdämmkörper vorbei in den Innenraum eingeführt werden müssen, was mit Nachteilen behaftet ist. Abgesehen davon ist eine zuverlässige Möglichkeit zu schaffen, den Vakuumdämmkörper im Rahmen der Herstellung des Gerätes zu evakuieren. Die Dokumente WO 99/20961 A1, GB 430 123 A und DE 10 2006 039621 A1 offenbaren Kühl- und/oder Gefriergeräte mit Vakuumdämmkörper. Das Dokument US 2 687 158 A offenbart einen Behälter mit einer Durchführung und mit einer Umhüllung, wobei die Verbindung zwischen Durchführung und Umhüllung durch eine thermische Versiegelung hergestellt ist.

Der vorliegenden Erfindung liegt daher die Aufgabe zugrunde, einen Vakuumdämmkörper der eingangs genannten Art dahingehend weiterzubilden, dass das Verlegen von Leitungen, Rohren und dergleichen und/oder die Erzeugung eines Vakuums in dem Vakuumdämmkörper einfach und zuverlässig möglich ist.

Diese Aufgabe wird durch ein Kühl- und/oder Gefriergerät mit den Merkmalen des Anspruchs 1 gelöst.

Danach ist vorgesehen, dass sich durch den von der Umhüllung umgebenen Bereich wenigstens eine Durchführung erstreckt, die einen Freiraum umgibt. Alternativ oder zusätzlich dazu kann vorgesehen sein, dass sich von der Umhüllung wenigstens ein Stutzen erstreckt, der derart an der Umhüllung angeordnet ist, dass diese evakuiert werden kann. Die Durchführung bzw. der Stutzen sind ebenfalls vakuumdicht ausgebildet und vakuumdicht mit der Umhüllung verbunden.

Der erfindungsgemäßen Ausgestaltung des Vakuumdämmkörpers liegt somit der Gedanke zugrunde, wenigstens eine Durchbrechung durch die Umhüllung des Vakuumdämmkörpers selbst herzustellen, so dass beispielsweise ein Kabel oder Rohr oder dergleichen von einer Seite der Umhüllung auf die andere Seite der Umhüllung geführt werden kann, ohne dass die Lebensdauer der Umhüllung beeinträchtigt wird.

Diese Durchbrechung bzw. Durchführung ist ihrerseits vakuumdicht ausgeführt und ebenfalls vakuumdicht mit der Umhüllung des Vakuumdämmkörpers verbunden. So ist es möglich, die vakuumdichte Umhüllung trotz der Durchführung bzw. des Stutzens mit hoher Lebensdauer auszuführen, da im Bereich der Durchführung bzw. des Stutzens ein Eindringen von Luft bzw. Gas verhindert wird.

Die Erfindung beschränkt sich nicht auf eine solche Durchführung, sondern erfasst auch einen Stutzen, der ebenfalls vakuumdicht bzw. diffusionsdicht mit der Umhüllung in Verbindung steht und durch den aus der Umhüllung zum Zwecke der Vakuumerzeugung Luft abgezogen werden kann.

Auch dieser Stutzen ist seinerseits vakuumdicht ausgebildet.

In Betracht kommt die Verwendung einer Hochbarrierefolie für die Umhüllung und/oder für die Durchführung und/oder für den genannten Stutzen.

Der Einsatz einer Folie hat den Vorteil, dass die Durchführung bzw. der Stutzen flexibel ausgeführt sind, so dass gegebenenfalls Anpassungen an die Positionierung der durchzuführenden Elemente, wie beispielsweise von Kabeln, Rohren etc. vorgenommen werden können.

Vorzugsweise ist vorgesehen, dass die Durchführung und/oder der Stutzen schlauchförmig ausgebildet sind.

Die Durchführung besteht aus einer Hochbarrierefolie. Dies kann für die vakuumdichte Umhüllung entsprechend gelten. Denkbar ist eine metallbeschichtete Kunststofffolie.

Vorzugsweise ist vorgesehen, dass die Durchführung und/oder der Stutzen aus einem Material bestehen, das thermisch versiegelt werden kann, und zwar derart, dass nach der thermischen Versiegelung eine vakuumdichte Verbindung mit der Umhüllung vorliegt.

Eine solche thermische Versiegelung kommt beispielsweise auch dann in Betracht, wenn nach dem Evakuierungsvorgang der Stutzen abgedichtet werden soll, damit das Vakuum in der Umhüllung erhalten bleibt.

Soll der Stutzen wieder verwendet werden, kann der versiegelte Abschnitt abgeschnitten werden und erneut ein Evakuierungsvorgang vorgenommen werden, sollte dies erforderlich sein.

Anstelle oder zusätzlich zu thermischen Versiegelungen ist auch eine Klebeverbindung denkbar und von der Erfindung mit umfaßt.

Gemäß der Erfindung ist vorgesehen, dass die vakuumdichte Verbindung zwischen der Durchführung und der Umhüllung durch eine thermische Versiegelung hergestellt ist. Denkbar ist es, diese thermische Versiegelung unter Aufwendung einer Presskraft herzustellen, die durch einen unten noch näher beschriebenen Formteilverbund in Form einer Klemme hergestellt wird.

Anstelle oder zusätzlich zu einer thermischen Versiegelung ist - wie ausgeführt - auch eine Verklebung denkbar.

Wie ausgeführt, kann die Durchführung und/oder der Stutzen und/oder die Umhüllung aus einer Folie bestehen. In Betracht kommt beispielsweise eine metallbeschichtete Folie, insbesondere Kunststofffolie, wie z. B. eine aluminiumbeschichtete PE-Folie.

In weiterer Ausgestaltung der Erfindung ist vorgesehen, dass ein oder mehrere Elemente durch die Durchführung verlaufen und von der Durchführung eng umschlossen sind. Dies kann beispielsweise dadurch erreicht werden, dass die Durchführung an diese Elemente angesaugt wird, so dass diese entsprechend eng anliegt. Alternativ oder zusätzlich ist es denkbar, dass die Durchführung mit dem oder den durchgeführten Elementen verklebt oder auf andere Weise verbunden ist.

Diese Maßnahmen zum Anliegen der Durchführung werden vorzugsweise vor Erzeugung des Vakuums in der Umhüllung vorgenommen.

Die vorliegende Erfindung betrifft des Weiteren ein Kühl- und/oder Gefriergerät mit wenigstens einem gekühlten Innenraum und mit wenigstens einer den gekühlten Innenraum wenigstens bereichsweise umgebenden Wandung, wobei die Wandung teilweise oder vollständig durch wenigstens einen Vakuumdämmkörper gemäß einem der Ansprüche 1 bis 5 gebildet wird. Der Vakuumdämmkörper bildet somit teilweise oder vollständig den Gerätekorpus.

Die Erfindung betrifft des Weiteren einen Formteilverbund zur Herstellung einer vakuumdichten Verbindung zwischen der Durchführung und/oder dem Stutzen und der Umhüllung eines Vakuumdämmkörpers gemäß einem der Ansprüche 1 bis 5 umfassend wenigstens eine Klemme, wobei die Klemme derart angeordnet ist, dass sie eine Druckkraft auf die Umhüllung und auf die Durchführung und/oder auf den Stutzen ausübt, so dass das Material der Umhüllung und das Material der Durchführung bzw. des Stutzen aufgrund der Druckkraft thermisch versiegelt wird.

Dieser Formteilverbund bewirkt aufgrund seiner auf das Materialgefüge ausgeübten Presskraft eine thermische Versiegelung der Materialien, vorzugsweise des Folienverbundes bzw. Foliengefüges und erlaubt zusätzlich am Endgerät wie beispielsweise am Kühl- und/oder Gefriergerät eine Zugentlastung. Die thermische Versiegelung stellt eine vakuumdichte Verbindung zwischen den beiden verbunden Folien her.

Weiterhin kann vorgesehen sein, dass der Formteilverbund wenigstens zwei relativ zueinander bewegliche Backen aufweist, zwischen denen die zu verpressenden bzw. die verpressten Materialien aufgenommen sind.

Dabei kann vorzugsweise vorgesehen sein, dass die Backen relativ zueinander vorzugsweise durch eine Rastverbindung fixierbar sind.

Denkbar ist es, die beiden Backen zusammenzupressen, wobei die Pressposition beispielsweise durch eine Rastverbindung gehalten wird. Die Presskraft kann beispielsweise pneumatisch, hydraulisch oder auch mechanisch z.B. durch eine Schraubverbindung erzeugt werden.

In weiterer Ausgestaltung der Erfindung ist vorgesehen, dass der Formteilverbund wenigstens einen Abschnitt aufweist, der die Innenwand eines Durchbruchs in die Durchführung bzw. in die Umhüllung bildet. So ist es denkbar, dass der Formteilverbund einen rohrförmigen Abschnitt aufweist, der die Innenwandungen eines Durchbruchs bildet, der von außen in die Durchführung führt bzw. von dem Stutzen in die Umhüllung. Ausgehend von diesem rohrförmigen Abschnitt bilden die genannten Backen flanschartige Abschnitte, die umlaufend ausgebildet sind.

Weiterhin ist es denkbar, dass der Formteilverbund aus Metall und vorzugsweise aus Aluminium besteht.

Weitere Einzelheiten und Vorteile der Erfindung werden anhand eines in der Zeichnung dargestellten Ausführungsbeispiels näher erläutert. Es zeigen:
- Figur 1:: eine schematische Ansicht eines Teils einer Umhüllung eines Vakuumdämmkörpers gemäß der vorliegenden Erfindung mit einem Innenbehälter,
- Figur 2:: eine schematische Ansicht eines weiteren Teils der Umhüllung eines Vakuumdämmkörpers mit einem Außenbehälter mit einem Evakuierungsstutzen und
- Figur 3:: Schnittdarstellungen durch den Verbindungsbereich zwischen der Umhüllung und der Durchführung sowie zwischen der Umhüllung und dem Evakuierstutzen.

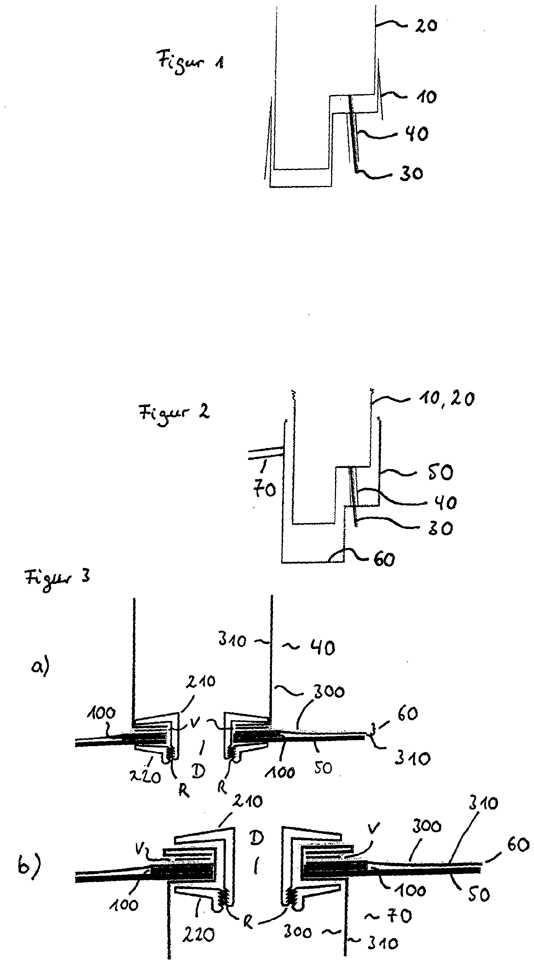

Figur 1 zeigt mit dem Bezugszeichen 10 eine Hochbarrierefolie, die zum Zwecke der Herstellung eines Kühl- und/oder Gefriergerätes über einen Innnenbehälter 20 eines Kühl- und/oder Gefriergerätes gestülpt wird und somit abgesehen von der offenen Seite des Innenbehälters dessen äußere Hülle bildet. Die vakuumdichte Hochbarrierefolie 10 ermöglicht die Erzeugung eines Vakuums zwischen der Folie 10 und der Außenhaut 50 des Gerätes bzw. deren Auskleidung 60, die schematisch in Figur 2 dargestellt ist.

Mit dem Bezugszeichen 30 sind elektrische Leitungen bzw. Rohrleitungen der Kältetechnik, d. h. des Kältemittelkreislaufes des Kühl- und/oder Gefriergerätes gekennzeichnet. Diese Leitungen 30 laufen von bzw. zu dem Innenbehälter 20 bzw. daran angeordneten oder im Laufe des Produktionsverfahrens noch anzuordnenden Komponenten, wie z.B. einer Innenbeleuchtung, einem Temperaturfühler, einem Verdampfer etc.

Das Bezugszeichen 40 kennzeichnet die erfindungsgemäße Durchführung. Diese ist vakuumdicht an der Hochbarrierefolie 10 fixiert und besteht ihrerseits, wie auch die Hülle 10 aus einer vakuumdichten Hochbarrierefolie.

Im Rahmen des Herstellprozesses wird diese schlauchartige Durchführung 40 zunächst an der Hülle 10 des Innenbehälters 40 und später an der Auskleidung 60 des Außengehäuses 50 vakuumdicht angeschlossen.

Figur 2 zeigt die Anordnung des mit der Folie 10 überzogenen Innenbehälters 20 sowie den Außenbehälter 50, auf dessen Innenseite sich ebenfalls eine Hochbarrierefolie 60 befindet. Der Außenbehälter 50 ist somit abgesehen von seiner offenen Seite, durch die der Innenbehälter 20 eingeführt wird, mit einer Hochbarrierefolie 60 ausgekleidet.

Der Vakuumdämmkörper umfaßt somit den Innenbehälter 20 mit Hülle 10 sowie den Außenbehälter 50 mit Auskleidung 60. Die Hülle 10 und die Auskleidung 60 bilden die vakuumdichte Umhüllung.

Das Bezugszeichen 70 kennzeichnet einen Evakuierungsstutzen, dessen Funktion unten näher erläutert wird.

Der Innenbehälter 20 und/oder der Außenbehälter 50 können aus Kunststoff, Metall oder aus jedem anderen geeigneten Material bestehen.

An dieser Stelle wird darauf hingewiesen, dass die Begriffe "Innenbehälter" und "Außenbehälter" allgemein zu verstehen sind und ein- oder auch mehrseitig offene oder auch geschlossene Gebilde darstellen können. Des Weiteren wird darauf hingewiesen, dass das sich auf ein Kühl- und/oder Gefriergerät beziehende Ausführungsbeispiel auch für sämtliche anderen Vakuumdämmkörper Geltung hat.

Die Durchführung 40 ist vakuumdicht auch mit der Auskleidung 60 des Außenbehälters 50 verbunden. Diese Ausführung ermöglicht es, den Bereich zwischen den Hochbarrierefolien 10, 60 zu evakuieren und auf diese Weise den erfindungsgemäßen Vakuumdämmkörper herzustellen. Ein Eintritt von Gas bzw. Luft in diesen Bereich wird durch die vakuumdichten Verbindungen zwischen der Durchführung 40 und der Folie 10 sowie zwischen der Durchführung 40 und der Folie 60 und durch die Tatsache verhindert, dass die Durchführung 40 selbst ebenfalls aus einer Hochbarrierefolie besteht.

In dem hier dargestellten Ausführungsbeispiel wird in dem Bereich zwischen der Innenbehälter-Umhüllung 10 und der Folie 60 des Außengehäuses 50 eine Schüttung, beispielsweise ein Perlitpulver eingebracht, anschließend die Umhüllung 10 mit der Auskleidung 60 vakuumdicht verschlossen und schließlich über den Evakuierungsstutzen 70 eine Evakuierung des Bereichs vorgenommen, in dem sich die Schüttung befindet. Der Evakuierungsstutzen 70 ist somit zu dem genannten Bereich hin offen, so dass über diesen die Vakuumerzeugung erfolgen kann.

Der Evakuierungsstutzen 70 besteht ebenfalls aus einer Hochbarrierefolie und ist vakuumdicht mit der Auskleidung bzw. Hochbarrierefolie 60 des Außenbehälters 50 verbunden.

Die Umhüllung 10 des Innenbehälters 20 sowie die Auskleidung 60 des Außengehäuses 50 bilden die erfindungsgemäße Umhüllung, die von der Durchführung 40 durchsetzt ist und an die der Stutzen 70 angeschlossen ist.

Die Fixierung bzw. vakuumdichte Verbindung zwischen der Durchführung 40 und der Umhüllung 10, 60 des Vakuumdämmkörpers sowie die vakuumdichte Verbindung zwischen dem Stutzen 70 um der Auskleidung 60 erfolgt mittels einer in Figur 3 dargestellten Klemme 200.

Figur 3a) zeigt die Anbindung der Durchführung 40 an die Auskleidung 60 des Außenbehälters 50, die identisch zu der Anbindung der Durchführung 40 an die Hülle 10 des Innenbehälters 20 ist.

Figur 3b) zeigt die Anbindung des Stutzens 70 an die Auskleidung 60 des Außenbehälters 50.

Wie dies aus Figur 3 hervorgeht, besteht die Klemme aus einem ersten Teil 210 und einem zweiten Teil 220, die jeweils eine umlaufende Backe aufweisen. Wie dies aus Figur 3 hervorgeht, begrenzen die beiden Backen zwischen sich einen Zwischenraum, in dem die einzelnen zu verbindenden Folien angeordnet sind, die die Durchführung 40, den Stutzen 70, die Hülle 10 und die Auskleidung 60 bilden.

Durch Aufbringen einer Presskraft zwischen den Backen, d.h. durch ein Zusammenpressen der Backen kommt es zu einer thermischen Versiegelung der beiden zu verbindenden Folien, die in dem hier dargestellten Ausführungsbeispiel jeweils aus einer Polyethylenschicht 300 und einer Aluminiumschicht 310 als Barrierefolie bestehen. Der Bereich der thermischen Versiegelung ist in Figur 3 jeweils mit dem Bezugszeichen V gekennzeichnet. Die Presskraft kann beispielsweise durch eine Schraubverbindung erzielt werden, die die Backen aneinander presst.

Die Rastelemente R an beiden Teilen 210 und 220 der Klemme dienen der Fixierung der Position der Teile 210, 220 relativ zueinander.

Das Bezugszeichen 50 kennzeichnet die Hülle des Vakuumdämmkörpers, wie beispielsweise Blech im Falle des Außenmantels 50 oder auch Kunststoff 20 im Falle des Innenbehälters.

Die Klemme 200 umgreift sowohl diese Hülle 20, 50 als auch die beiden miteinander zu verbindenen Folienabschnitte, so dass im Fall gemäß Figur 3a) eine vakuumdichte Verbindung zwischen der Durchführung 40 und der Folie 60 der Umhüllung erzielt wird. Die Klemme 200 ist durch den Durchbruch D in der Außenhaut 50 geführt.

Das Ausführungsbeispiel gemäß Figur 3b) zeigt die Verbindung zwischen dem Evakuierungsstutzen 70 und der Auskleidung 60, wobei wie aus Figur 3b) ersichtlich die Folie des Evakuierungsstutzens 70 durch die Durchbrechung D der Hülle 50 geführt und auf der Innenseite der Hülle 50 eingeschlagen ist.

Auch in diesem Fall ergibt sich durch thermische Versiegelung eine vakuumdichte Verbindung zwischen der Auskleidung 60 und dem Stutzen 70, so dass durch Anlegen eines Unterdrucks mittels des Stutzens 70 eine Evakuierung des Bereiches zwischen den Folien 10 und 60 des Vakuumdämmkörpers erreicht werden kann.

Das Bezugszeichen 100 kennzeichnet eine Gegendruckmatte, die die Aufgabe hat, ein Widerlager für die durch die Klemme aufgebrachte Druckkraft zu bilden und zu halten. Die Gegendruckmatte befindet sich zwischen dem Außenmantel 50 und einer der Folien bzw. zwischen dem Innenbehälter 20 und einer der Folien.

Wie dies aus Figur 3 hervorgeht, durchgreift die Klemme eine Durchbrechung D in der Hülle 50 und in dem Innenbehälter 20. Die Klemme kann nach der Verbindung der Folien entfernt werden oder auch als Zugentlastung entfernt werden.

Die Klemme besteht vorzugsweise aus Metall und besonders bevorzugt aus Aluminium.

## Patentansprüche

1. Kühl- und/oder Gefriergerät mit
einem gekühlten Innenraum, und
einer den gekühlten Innenraum bereichsweise umgebenden Wandung, die durch einen Vakuumdämmkörper mit einer vakuumdichten Umhüllung (10) gebildet ist, wobei
sich eine Durchführung (40) durch den von der Umhüllung (10) umgebenen Bereich erstreckt, die einen Freiraum umgibt und ebenfalls vakuumdicht ausgebildet ist sowie vakuumdicht mit der Umhüllung (10) verbunden ist, und
die vakuumdichte Verbindung zwischen der Durchführung (40) und der Umhüllung (10) durch eine thermische Versiegelung hergestellt ist,
**dadurch gekennzeichnet, dass**
die Durchführung (40) aus einer Hochbarrierefolie besteht, und
in dem von der Umhüllung (10) umgebenen Bereich eine Schüttung vorhanden ist.

2. Kühl- und/oder Gefriergerät nach Anspruch 1, **dadurch gekennzeichnet, dass** die Durchführung (40) schlauchförmig ausgebildet ist.

3. Kühl- und/oder Gefriergerät nach einem der vorhergehenden Ansprüche, **dadurch gekennzeichnet, dass** ein oder mehrere Elemente (30) durch die Durchführung (40) verlaufen und von der Durchführung (40) eng umschlossen sind und/oder mit dieser verklebt oder mit dieser anderweitig verbunden sind.

4. Verfahren zur Herstellung einer vakuumdichten Verbindung zwischen der Durchführung (40) und der Umhüllung (10) eines Vakuumdämmkörpers eines Kühl- und/oder Gefriergerätes nach einem der vorhergehenden Ansprüche unter Verwendung eines Formteilverbundes, wobei der Formteilverbund eine Klemme (200) umfasst, wobei die Klemme (200) eine Druckkraft auf die Umhüllung (10) und auf die Durchführung (40) ausübt, so dass das Material der Umhüllung (10) und das Material der Durchführung (40) aufgrund der Druckkraft thermisch versiegelt werden.

5. Verfahren nach Anspruch 4, **dadurch gekennzeichnet, dass** der Formteilverbund wenigstens zwei relativ zueinander beweglich angeordnete Backen aufweist, zwischen denen die zu verpressenden bzw. verpressten Materialien aufgenommen werden, wobei vorzugsweise vorgesehen ist, dass die Backen relativ zueinander vorzugsweise durch eine Rastverbindung (R) fixiert werden.

6. Verfahren nach Anspruch 4 oder 5, **dadurch gekennzeichnet, dass** der Formteilverbund wenigstens einen Abschnitt aufweist, der die Innenwand eines Durchbruches (D) in die Durchführung (40) bzw. in die Umhüllung (10) bildet.

7. Verfahren nach einem der Ansprüche 4 bis 6, **dadurch gekennzeichnet, dass** der Formteilverbund aus Metall, vorzugsweise als Aluminium besteht.

## Claims

1. Refrigerator and/or freezer, comprising
a cooled interior space, and
a wall partly surrounding the cooled interior space, which wall is formed by a vacuum insulation body with a vacuum-tight envelope (10), wherein
a lead-through (40) extends through the region surrounded by the envelope (10), which surrounds a free space, and is likewise formed vacuum-tight and is vacuum-tightly connected with the envelope (10), and
the vacuum-tight connection between the lead-trough (40) and the envelope (10) is made by a thermal sealing,
**characterized in that**
the lead-through (40) consists of a high-barrier film, and
a filling is present in the region surrounded by the envelope (10).

2. Refrigerator and/or freezer according to claim 1,
**characterized in that** the lead-through (40) is formed tubular.

3. Refrigerator and/or freezer according to one of the preceding claims, **characterized in that** that one or more elements (30) extend through the lead-through (40) and are tightly enclosed by the lead-through (40) and/or are glued to the same or otherwise connected with the same.

4. Method for establishing a vacuum-tight connection between the lead-through (40) and the envelope (10) of a vacuum insulation body of a refrigerator and/or freezer according to any of the preceding claims using a molding compound, wherein the molding compound comprises a clamp (200), wherein the clamp (200) exerts a pressing force on the envelope (10) and on the lead-through (40), so that the material of the envelope (10) and the material of the lead-through (40) are thermally sealed due to the pressing force.

5. Method according to claim 4, **characterized in that** the molding compound comprises at least two jaws movably arranged relative to each other, between which the materials compressed and/or to be compressed are accommodated, wherein preferably it is provided that the jaws are fixed relative to each other, preferably by a latching connection (R).

6. Method according to claim 4 or 5, **characterized in that** the molding compound comprises at least one portion that forms the inner wall of an aperture (D) into the lead-through (40) or into the envelope (10).

7. Method according to one of claims 4 to 6, **characterized in that** the molding compound consists of metal, preferably of aluminum.

## Revendications

1. Appareil de réfrigération et/ou de congélation, comprenant
un espace intérieur réfrigéré, et
une paroi entourant par zones l'espace intérieur réfrigéré, qui est formée par un corps d'isolation par le vide doté d'une enveloppe étanche au vide (10),
dans lequel une traversée (40) s'étendant à travers la zone entourée par l'enveloppe (10), ladite traversée entourant un espace libre et étant également réalisée étanche au vide ainsi que reliée à l'enveloppe (10) de manière étanche au vide, et
la liaison étanche au vide entre la traversée (40) et l'enveloppe (10) étant réalisée par un scellage thermique,
**caractérisé en ce que**
la traversée (40) consiste en une feuille haute barrière, et
une matière de remplissage se trouve dans la zone entourée par l'enveloppe (10).

2. Appareil de réfrigération et/ou de congélation selon la revendication 1, **caractérisé en ce que** la traversée (40) est réalisée sous la forme d'un tuyau.

3. Appareil de réfrigération et/ou de congélation selon l'une des revendications précédentes, **caractérisé en ce qu'**un ou plusieurs éléments (30) s'étendent à traverse de la traversée (40) et sont étroitement enfermés par la traversée (40) et/ou collés à celle-ci ou reliés à celle-ci d'une autre manière.

4. Procédé de fabrication d'une liaison étanche au vide entre la traversée (40) et l'enveloppe (10) d'un corps d'isolation par le vide d'un appareil de réfrigération et/ou de congélation selon l'une des revendications précédentes en utilisant un assemblage de pièces moulées, l'assemblage de pièces moulées comprenant une pince (200), la pince (200) exerçant une force de pression sur l'enveloppe (10) et sur la traversée (40), de telle sorte que le matériau de l'enveloppe (10) et le matériau de la traversée (40) sont scellés thermiquement en raison de la force de pression.

5. Procédé selon la revendication 4, **caractérisé en ce que** l'assemblage de pièces moulées comporte au moins deux mâchoires disposées déplaçables l'une par rapport à l'autre, entre lesquelles les matériaux comprimés ou à comprimer sont reçus, il étant de préférence prévues pour les mâchoires d'être fixées l'une par rapport à l'autre de préférence par une liaison par encliquetage (R).

6. Procédé selon la revendication 4 ou 5, **caractérisé en ce que** l'assemblage de pièces moulées comporte au moins une partie, qui forme la paroi intérieure d'une ouverture (D) dans la traversée (40) ou dans l'enveloppe (10).

7. Procédé selon l'une des revendications 4 à 6, **caractérisé en ce que** l'assemblage de pièces moulées consiste en métal, de préférence en aluminium.
